# EUROPÄISCHE PATENTSCHRIFT

(11) **EP 1 719 009 B1**
(45) Veröffentlichungstag und Bekanntmachung des Hinweises auf die Patenterteilung: **16.12.2009**
(21) Anmeldenummer: 05707448.6
(22) Anmeldetag: 17.02.2005
(51) Int. Cl.: G02B 26/02, G02B 21/06

(54) **VERFAHREN ZUR STEUERUNG EINES LICHTVERSCHLUSSES**
METHOD FOR CONTROLLING A LIGHT CLOSURE
PROCEDE POUR COMMANDER UN VERROU LUMINEUX

(30) Priorität: 20.02.2004 DE 102004008326
(43) Veröffentlichungstag der Anmeldung: 08.11.2006
(73) Patentinhaber: Carl Zeiss MicroImaging GmbH, 07745 Jena (DE)
(72) Erfinder: DÖRING, Gerhard, 07646 Schlöben (DE); KAUFHOLD, Tobias, 07749 Jena (DE)
(86) Internationale Anmeldenummer: PCT/EP2005/001597
(87) Internationale Veröffentlichungsnummer: WO 2005/083491

(56) Entgegenhaltungen:
- EP-A- 1 273 955
- DE-A1- 10 049 345
- DE-A1- 10 132 119
- US-A1- 2002 118 430
- US-B1- 6 635 011
- 'Ansteuertechniken' THORSTEN ONLINE, [Online] Gefunden im Internet: <URL:http://www.ostermann-net.de/electronic /schritt/sm_ansteuer.htm> [gefunden am 2009-08-29]

## Beschreibung

Die vorliegende Erfindung betrifft ein Verfahren zur Steuerung eines motorbetriebenen Lichtverschlusses zum Öffnen und Verschließen des Beleuchtungsstrahlenganges optischer Geräte.

Nach dem bekannten Stand der Technik gibt es in der Optik und speziell in der Mikroskopie eine Vielzahl von Varianten zum Öffnen und Schließen optischer Strahlengänge, bei denen ein Verschlusselement in den Strahlengang geschoben, geschwenkt, geklappt o. ä. wird. Die Verschlusselemente werden dabei mit unterschiedlichen Antrieben bewegt. Am häufigsten werden Zug- und Drehmagnete oder Motoren mit Endlagen verwendet.

Bei den sogenannten Verschiebesystemen wird das Verschlusselement direkt in den Strahlengang geschoben. Der Antrieb erfolgt meist über Zugmagneten.

Bei den Schwenksystemen wird das Verschlusselement in den Strahlengang gedreht. Der Drehpunkt ist gleichzeitig der Angriffspunkt des rotatorischen Antriebes. Hierbei kommen in der Regel Drehmagneten oder Motoren zum Einsatz.

Eine weitere Lösungsvariante stellen Klappsysteme dar. Bei diesen Lösungen wird das Verschlusselement in den Strahlengang geklappt. Dabei dreht sich das Verschlusselement um einen Fixpunkt. Der Antrieb erfolgt meist über Zugmagneten. Die longitudinale Bewegung des Zugmagneten wird hierbei in eine Drehbewegung umgewandelt.

In DE 100 29 444 A1 wird eine Lösung beschrieben, vorzugsweise für Laser-Scanning-Mikroskope, bei der die Verschlussteile magnetisch angetrieben werden. Die Vorrichtung verfügt zusätzlich über Einrichtungen um die Funktion der Unterbrechungseinrichtung zu überwachen, um die Sicherheit bei der Verwendung von Lasern gewährleisten zu können.

Das Patent EP 0 482 340 A1 beschreibt eine Lösung, bei der ein Verschlussteil in Form einer Scheibe mit Öffnungen direkt motorisch bewegt wird und dadurch den Strahlengang öffnet bzw. schließt. Das Verschlussteil wird hierbei ähnlich einem Filterrad mit Hilfe eines Schrittmotors bewegt.

In den Schriften US 6,046,836 A1; US 6.215,575 B1 und US 6,466,353 B2 wird ein Lichtmodulator beschrieben der für schwingenden Betrieb vorgesehen ist und bei dem der Lichtverschluss von einem Schrittmotor betätigt wird. Mit dieser Anordnung ist zwar ein statischer Betrieb realisierbar, jedoch kann der Spulenstrom dabei nicht ohne größeren Aufwand für eine entsprechende Steuerung abgesenkt werden, so dass die Verlustleistung und somit auch die Erwärmung des Motors relativ hoch wird. Die Anordnung besitzt weiterhin den Nachteil, dass der Verdrehwinkel nur einem Vollschritt eines Schrittmotors entspricht. Um eine Apertur von ca. 1 cm Durchmesser abzudecken ist entweder ein sehr großer Vollschritt erforderlich, der ein geringes Drehmoment des Schrittmotors zur Folge hat. Oder der Schrittmotor ist entsprechend weit von der zu verschließenden Apertur zu entfernen, um den erforderlichen Schaltweg realisieren zu können. Der Platzbedarf für die Gesamtbaugruppe würde dann aber enorm steigen.

In der US 5,739,942 wird ein mikrokeramischer optischer Shutter beschrieben, der aus einer Lichtverschlussklappe mit einem Permanentmagneten und einem einphasigen Stator besteht. In Abhängigkeit von der Stromrichtung kann die Lichtverschlussklappe geöffnet und geschlossen werden. Diese Lösung hat die Nachteile, das ein relativ hoher einmaliger Aufwand zur Herstellung der Sinterformen für die Keramik und Formteile für den Permanentmagneten notwendig sind. Das Drehmoment ist durch die niedrige Zahl von nur zwei Polen relativ gering. Ein weiterer Nachteil ist die schlechte Ausnutzung des magnetischen Luftspaltfeldes durch die relativ geringe Umschließungsfläche der Statorpole um den permanentmagnetischen Läufer. Die fest in die Keramikform implementierten Begrenzungsstifte begrenzen die Bewegung der Lichtverschlussklappe. Dabei ist der Bewegungsbereich deutlich geringer als ein Vollschritt, wenn eine magnetisch stabile Position hier als Vollschrittt betrachtet wird.

In der EP 1273955 A1 wird eine optische Verschlussvorrichtung für eine wahlweise Unterbrechung eines Strahlengangs, insbesondere für Licht in einem Wellenlängenbereich unter 300nm beschrieben. Dabei dient die Sperreinrichtung zum Einen der Unterbrechung des Strahlengangs und zum Anderen dem Schutz der empfindlichen optischen Elemente vor der aggressiven Strahlung. Dazu verfügt die Sperreinrichtung über einen lichtundurchlässigen, gekrümmten Oberflächenbereich der bewirkt, dass die Intensität des unterbrochenen Lichtstrahls ein groberes Flächenelement beleuchtet, als es dem Strahlquerschnitt entspricht. Dadurch verringert sich für das den Lichtstrahl unterbrechende Material die Strahlungsbelastung pro Flächeneinheit. Dies kann vor allem bei hochenergetischer Strahlung, z.B. Ultraviolettstrahlung, zu einer Verlängerung der Lebensdauer der Verschlussvorrichtung beitragen.

Die DE 101 32 119 A1 beschreibt eine elektromechanische Blende, die aus möglichst wenigen, mechanischen Einzelteilen besteht. Um neben dem Verschließen des Strahlenganges auch verschiedene Blendenöffnungen realisieren zu können, werden die Blendenelemente durch einen Schrittmotor entlang speziell geformter, schlitzförmiger Kurvenbahnen bewegt. Die Kurvenbahnen sind dabei so geformt, dass die Schritte des Motors gleich große Änderungen der Blendenöffnung zur Folge haben. Die kontinuierliche Verstellung erfolgt hierbei über mehrere Schritte des Motors. Da keine direkte Ankopplung an die Motorwelle erfolgt sind entsprechende Bewegungswandler erforderlich.

Ein Lichtmodulator für schwingenden Betrieb mit einem schrittmotorbetriebenen Lichtverschluss wird in der US 2002/0118430 A1 beschrieben. Mit dieser Anordnung ist zwar ein statischer Betrieb realisierbar, jedoch kann der Spulenstrom dabei nicht ohne größeren Aufwand für eine entsprechende Steuerung abgesenkt werden, so dass die Verlustleistung und somit auch die Erwärmung des Motors relativ hoch wird. Die Anordnung besitzt weiterhin den Nachteil, dass der Verdrehwinkel nur einem Vollschritt eines Schrittmotors entspricht.
Um eine Apertur von ca. 1 cm Durchmesser abzudecken ist entweder ein sehr großer Vollschritt erforderlich, der ein geringes Drehmoment des Schrittmotors zur Folge hat. Oder der Schrittmotor ist entsprechend weit von der zu verschließenden Apertur zu entfernen, um den erforderlichen Schaltweg realisieren zu können. Der Platzbedarf für die Gesamtbaugruppe würde dann aber enorm steigen.

Eine Lichtquellenvorrichtung für ein Endoskop wird in der DE 100 49 345 A1 beschrieben. Das in dieser Lösung zur Einstellung der Menge des durch die Blende tretenden Beleuchtungslichtes Blendenlamellen-Paar ist durch ein Federelement in eine Richtung vorgespannt. Dies hat allerdings zur Folge, dass der Motor in eine Richtung die Federkraft überwinden und so eine größere Kraft zur Betätigung aufbringen muss. Auch hier liegt keine direkte Ankopplung an die Motorwelle vor, so dass Bewegungswandler erforderlich sind. Eine kontinuierliche Verstellung kann hierbei nur über mehrere Schritte des Motors erfolgen, so dass auch eine alleinige Stromrichtungsumkehr allein nicht ausreichend ist.

Magnetantriebe haben die Nachteile, dass diese meist eine große Baugröße aufweisen, um die erforderlichen Kräfte realisieren zu können. Zum anderen sind oft zusätzliche Rückhohlfedem erforderlich. Um eine entsprechende Stellung zu halten ist die Anordnung in der Regel ständig mit Strom zu beaufschlagen, wodurch eine hohe Verlustleistung (Wärme) entsteht. Außerdem sind mit Magnetantrieben kleine Vollschrittwinkel kaum realisierbar.

Der vorliegenden Erfindung liegt die Aufgabe zugrunde ein Verfahren zur Steuerung eines Lichtschutzverschlusses für optische Geräte zu entwickeln, für dessen Antrieb ein handelsüblicher Schrittmotor verwendbar ist, wobei der Schrittmotor ohne eine aufwendige Steuerung betrieben werden soll.

Erfindungsgemäß wird die Aufgabe durch die Merkmale der unabhängigen Ansprüche gelöst. Bevorzugte Weiterbildungen und Ausgestaltungen sind Gegenstand der abhängigen Ansprüche.

Bei dem erfindungsgemäßen Verfahren zur Steuerung eines Lichtverschlusses erfolgt die Bewegung eines auf einer Motorwelle eines zweiphasigen Schrittmotors mit 2 Wicklungen und einem großen Vollschrittwinkel befestigten Verschlusselementes, indem von einer Steuereinheit die Drehung des elektromagnetischen Feldes im Stator des Schrittmotors von 180° und dadurch eine entsprechende Drehung der Motorwelle von 2 Vollschritten realisiert wird und zur gerichteten Bewegung des Verschlusselementes von der Steuereinheit eine gleichzeitige Stromrichtungsumkehrung in den beiden Wicklungen des Schrittmotors erfolgt, wobei die mechanische Drehung des Rotors durch zwei Anschlagstifte auf einen Bewegungsbereich kleiner als 2 Vollschritte begrenzt wird und die Positionen der zwei Anschlagstifte so gewählt sind, dass der Rotor nach Erreichen der Endstellung des Verschlusselementes einem Moment ausgesetzt ist, das den Rotor bzw. das damit verbundene Verschlusselement in der Endstellung hält.

Das vorgeschlagene Verfahren stellt eine preisgünstige Lösung zum Öffnen und Verschließen von Strahlengängen optischer Geräte dar. Der Antrieb des beispielsweise in Form eines Kreissegmentes ausgeführten Schwenkelementes, erfolgt durch einen handelsüblichen Schrittmotor.

Es ist vorgesehen einen Schrittmotor mit einem relativ großen Vollschrittwinkel zu verwenden, da derartige Schrittmotoren u. a. in Druckern und Scannern bereits Verwendung finden, ohne weiteres verfügbar und deshalb äußerst kostengünstig sind.

Die Erfindung wird nachfolgend anhand eines Ausführungsbeispieles beschrieben. Dazu zeigen:
- Figur 1:: die Anordnung eines Lichtverschlusses im Strahlengang eines Mikroskops,
- Figur 2:: die statische Drehmomentenkurve eines Schrittmotors vom Typ 15M20S13,
- Figur 3a:: die Momenten-Vektor-Diagramme eines Ansteuerzyklusses und
- Figur 3b:: die Momenten-Vektor-Diagramme eines Ansteuerzyklusses mit mechanischer Begrenzung durch Anschlagstifte.

Bei dem erfindungsgemäßen Verfahren zur Steuerung des Lichtverschlusses erfolgt die Bewegung des auf der Motorwelle befestigten Verschlusselementes, indem von der Steuereinheit die Drehung des elektromagnetischen Feldes im Stator des Schrittmotors von 180° und dadurch eine entsprechende Drehung der Motorwelle von n Vollschritten, vorzugsweise 2 Vollschritte realisiert wird. Dazu wird von der Steuereinheit eine Stromrichtungsumkehrung in beiden Wicklungen des zweiphasigen Schrittmotors realisiert.

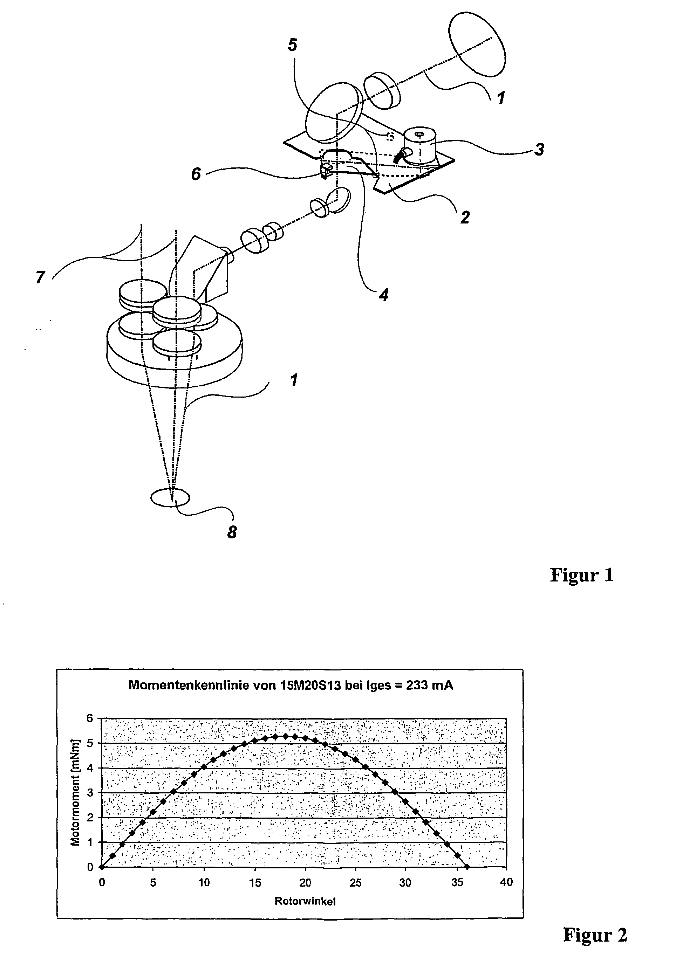

**Figur 1** zeigt dazu die Anordnung des zu steuernden Lichtverschlusses im Strahlengang eines Mikroskops. Der Lichtverschluss für den Beleuchtungsstrahlengang **1** optischer Geräte, besteht aus einer, mit einer Blendenöffnung versehenen Befestigungseinheit **2,** einem an dieser montierten Schrittmotor **3** und einem mit der Motorwelle des Schrittmotors verbundenen Verschlusselement **4** zum Öffnen und Verschließen der Blendenöffnung. Vorzugsweise wird ein zweiphasiger Schrittmotor **3** mit einem großen Vollschrütwinkel verwendet, der mit einer (nicht dargestellten) Steuereinheit verbunden ist und der die erforderliche Bewegung des Verschlusselementes **4** in einem geringen Abstand von der Motorwelle realisiert. Besonders vorteilhaft ist die Verwendung eines zweiphasigen Schrittmotors **3** mit klauenpolförmiger Rotor- und Statorausführung. Die Bewegung des Verschlusselementes **4** kann dabei durch einen Anschlagstift **5** in jeder der beiden Endstellungen, auf einen Bewegungsbereich kleiner als n Vollschritte begrenzt werden.

Wird die in der Befestigungseinheit **2** vorhandene Blendenöffnung nicht vom Verschlusselement **4** abgedeckt, gelangt das Beleuchtungslicht über den Beleuchtungsstrahlengang **1** in die Objektebene **8.** Ein in der Objektebene **8** angeordnetes Objekt kann dann über den Beobachtungsstrahlengang **7** des Mikroskops betrachtet werden.

Die Bestromung von einer oder gleichzeitig von zwei Wicklungen eines zweiphasigen Schrittmotors, hängt von dessen statischen Momentenkurve ab.
In der beschriebenen Ausführung wurde ein Schrittmotor des amerikanischen Herstellers DANAHER MOTION (www.danahermotion.com), der Schrittmotoren unter dem Warenzeichen "THOMSON" vertreibt, eingesetzt. **Figur 2** zeigt hierzu die statische Drehmomentenkurve eines Schrittmotors vom Typ 15 M 20 S 13 mit folgenden technischen Daten:

| Typ | 15M020S1B |
|---|---|
| Vollschrittwinkel | 18 |
| Haltemoment | 3,88 mNm |
| Wicklungswiderstand | 40 Ohm |
| Nennstrom | 125 mA |
| Nennspannung | 5V |

Bei einfachen Schrittmotoren mit klauenpolförmigen Läufer- und Ständerausführungen ist es meist günstiger gleichzeitig zwei Wicklungen zu bestromen, um steilere Drehmomentenkurven zu erhalten.

Nach **Figur 2** stellt sich ein stabiler Arbeitspunkt (Nulldurchgang mit positivem Anstieg) bei einem Rotorwinkel von 0° ein. Bei Stromrichtungsumkehrung in beiden Wicklungen klappt die Momentenkennlinie an der Horizontalachse um und es entsteht ein stabiler Arbeitspunkt bei einer Rotorwinkelverdrehung bei 36°. Erfolgt nunmehr eine alternierende Stromrichtungsumkehrung in beiden Wicklungen so bewegt sich der Läufer des Schrittmotors um jeweils 36° hin und zurück, was zwei Voltschritten mit einem Winkel von 18° entspricht.

Um zu verhindern, dass der Rotor in die Gegenrichtung dreht, muss eine gerichtete Drehrichtung erzwungen werden.

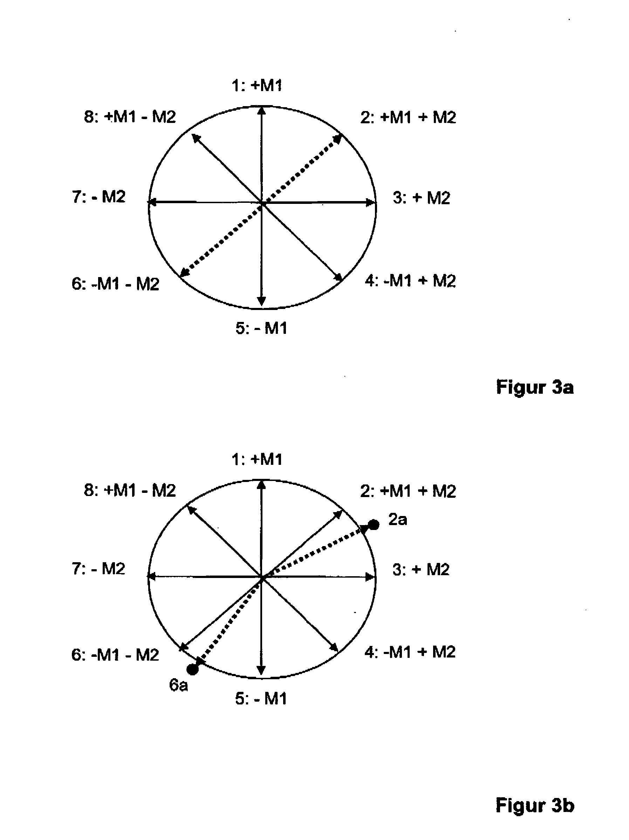

Die Momentenvektoren nach **Figur 3a** zeigen die Bewegungszustände des Magnetfeldes im Stator für einen Zyklus im Halbschrittbetrieb. Für den Schrittmotor vom Typ 15 M 20 S 13 wird nur zwischen den Zuständen 2 und 6 des Momentenvektordiagramms gesprungen. Dazu wird die Stromrichtung in beiden Wicklungen gleichzeitig umgepolt. Der Rotor dieses Schrittmotors mit einem Vollschrittwinkel von 18° bewegt sich dabei um genau zwei Vollschritte, was einem Bewegungsbereich von 36° entspricht.

Bei einer gleichzeitigen Stromrichtungsumkehrung ist es dabei zufällig, ob der Rotor aus der Position 2 rechts herum (2-3-4-5-6) oder links herum (2-1-8-7-6) in die Position 6 dreht.

Eine gezielte gerichtete Bewegung des Verschlusselementes **4** kann erreicht werden, wenn die mechanische Drehung des Rotors durch Anschlagstifte auf einen Bewegungsbereich kleiner als n, vorzugsweise 2, Vollschritte begrenzt ist und von der Steuereinheit eine gleichzeitige Stromrichtungsumkehrung in den einzelnen Wicklungen des Schrittmotors **3** erfolgt.

Durch die Verwendung von mechanischen Anschlagstifte **5** vereinfacht sich die Steuerung des Verschlusselementes **4** erheblich, da eine zeitliche verzögerte Stromrichtungsumkehrung in den einzelnen Wicklungen des Schrittmotors **3** nicht erforderlich ist. **Figur 3b** zeigt die Momenten-Vektor-Diagramme eines Ansteuerzyklusses mit mechanischer Begrenzung durch Anschlagstifte **5** in den Stellungen 2a und 6a.

Der Lichtverschluss kann direkt auf die Motorwelle befestigt werden, und wird durch mechanische Anschlagstifte **5** in der Bewegung begrenzt. Der Bewegungsbereich muss dabei etwas geringer als der doppelte Vollschrittwinkel sein, damit eine gerichtete Schaltbewegung gewährleistet wird. Der Lichtverschluss wird so auf die Motorwelle befestigt, dass er im bestromten Wicklungszustand jeweils an den mechanischen Anschlagstiften anliegt. Der durch die Stifte begrenzte Bewegungsbereich ist geringfügig kleiner als der doppelte Vollschritt, wodurch ein Drehmoment in der jeweiligen Stillung des Lichtverschlusses erzeugt wird, das den Lichtverschluss an die mechanischen Anschlagstifte drückt. Dadurch wird eine sehr genaue Positionierung des Lichtverschlusses erreicht. Die Bewegung des Rotors eines Schrittmotors gegen einen mechanischen Anschlag bewirkt im Gegensatz zu einem Gleichstrommotor keine Verlustleistungserhöhung des Motors.

Für das Halten an den mechanischen Anschlägen ist nicht mehr der Nennstrom des Schrittmotors notwendig, für diesen Zeitabschnitt kann der Strom auf einen erforderlichen Mindestwert abgesenkt werden. Einige Schrittmotoren besitzen auf Grund der Polform von Rotor und Stator ein Selbsthaltemoment durch den dauermagnetischen Rotor, das ausreichen kann um die Positionen an den mechanischen Anschlägen zu halten. In diesen Fällen ist es sogar möglich die Wicklungsströme der einzelnen Wicklungen des Schrittmotors jeweils nach dem Erreichen der Endstellung des Verschlusselementes abzuschalten.

Aus Gründen der Sicherheit ist bei der Inbetriebnahme des optischen Gerätes, beispielsweise durch Auswertung des Signals des Endlagensensors, sicherzustellen, dass die Blendenöffnung vom Verschlusselement verschlossen ist. Dies kann aber auch dadurch erreicht werden, dass die Wicklungen des Schrittmotors bei der Inbetriebnahme des optischen Gerätes mit einer vorbestimmten Stromrichtung beaufschlagt werden.

Es ist vorteilhaft zusätzlich einen Endlagensensor **6** vorzusehen, der an der Befestigungseinheit **2** befestigt ist und die Lage des Verschlusselementes **4** ermittelt.

Mit dem erfindungsgemäßen Verfahren wird eine sehr kostengünstige und einfache Lösung eines Lichtverschlusses für den Strahlengang optischer Geräte zur Verfügung gestellt. Die zum Einsatz kommenden handelsüblichen Schrittmotoren besitzen höhere Polzahlen und ein vollständig umschlossenes magnetisches Luftspaltfeld und ermöglichen kurze Verschluss- und Öffnungszeiten des Lichtverschlusses. Der in der Regel vorhandene Nachteil einer relativ aufwendigen Ansteuerung konnte bei den verwendeten Schrittmotoren durch das erfindungsgemäße Steuerverfahren behoben werden.

## Patentansprüche

1. Verfahren zur Steuerung eines Lichtverschlusses, bei dem die Bewegung eines auf einer Motorwelle eines zweiphasigen Schrittmotors (3) mit 2 Wicklungen und einem großen Vollschrittwinkel befestigten Verschlusselementes (4) erfolgt, indem von einer Steuereinheit die Drehung des elektromagnetischen Feldes im Stator des Schrittmotors (3) von 180° und **dadurch** eine entsprechende Drehung der Motorwelle von 2 Vollschritten realisiert wird, indem zur gerichteten Bewegung des Verschlusselementes (4) von der Steuereinheit eine gleichzeitige Stromrichtungsumkehrung in den beiden Wicklungen des Schrittmotors (3) erfolgt, wobei die mechanische Drehung des Rotors durch zwei Anschlagstifte (5) auf einen Bewegungsbereich kleiner als 2 Vollschritte begrenzt wird und die Positionen der zwei Anschlagstifte so gewählt sind, dass der Rotor nach Erreichen der Endstellung des Verschlusselementes (4) einem Moment ausgesetzt ist, das den Rotor bzw. das damit verbundene Verschlusselement (4) in der Endstellung hält.

2. Verfahren nach Anspruch 1, bei dem die Wicklungsströme der beiden Wicklungen des Schrittmotors (3) jeweils nach dem Erreichen der Endstellung des Verschlusselementes (4) reduziert werden, wobei die Endstellung nach 2 Vollschritten oder dem Berühren eines der Anschlagstifte (5) erreicht ist.

3. Verfahren nach mindestens einem der vorgenannten Ansprüche, bei dem die Wicklungsströme der beiden Wicklungen des Schrittmotors (3) jeweils nach dem Erreichen der Endstellung des Verschlusselementes (4) abgeschaltet werden, wenn das Selbsthaltemoment des Schrittmotors (3) groß genug ist, um das Verschlusselement (4) in der jeweiligen Endstellung zu halten.

4. Verfahren nach mindestens einem der vorgenannten Ansprüche, bei dem bei der Inbetriebnahme des optischen Gerätes durch Auswertung des Signals des Endlagensensors (6) sichergestellt wird, dass die Blendenöffnung vom Verschlusselement (4) verschlossen ist.

5. Verfahren nach mindestens einem der vorgenannten Ansprüche, bei dem bei der Inbetriebnahme des optischen Gerätes die beiden Wicklungen des Schrittmotors (3) mit einer vorbestimmten Stromrichtung beaufschlagt werden, um sicher zu stellen, dass die Blendenöffnung vom Verschlusselement (4) verschlossen ist.

## Claims

1. Method for controlling a light closure, in which the movement of a closure element (4) fastened on a motor shaft of a two-phase stepping motor (3) occurs with 2 windings and a large full step angle, owing to the fact that a control unit rotates the electromagnetic field in the stator of the stepping motor (3) by 180°, a corresponding rotation of the motor shaft by 2 full steps thereby being implemented, and that the control unit performs a simultaneous reversal of the current direction in the two windings of the stepping motor (3) for the purpose of directed movement of the closure element (4), the mechanical rotation of the rotor being limited by two stop pins (5) in a movement range of less than 2 full steps, and the positions of the two stop pins being selected such that after reaching the end position of the closure element (4) the rotor is acted upon by a torque which holds the rotor or the closure element (4) connected to it in the end position.

2. Method according to Claim 1, in which the currents per winding of the two windings of the stepping motor (3) are respectively reduced after the end position of the closure element (4) is reached, the end position being reached after 2 full steps or upon contact being made with one of the stop pins (5).

3. Method according to at least one of the preceding claims, in which the currents per winding of the two windings of the stepping motor (3) are respectively switched off after the end position of the closure element (4) has been reached, if the detent torque of the stepping motor (3) is large enough to hold the closure element (4) in the respective end position.

4. Method according to at least one of the preceding claims, in which when the optical device is started up, it is ensured by evaluating the signal of the end position sensor (6) that the aperture is closed by the closure element (4).

5. Method according to at least one of the preceding claims, in which when the optical device is started up a predetermined current direction is applied to the two windings of the stepping motor (3) in order to ensure that the aperture is closed by the closure element (4).

## Revendications

1. Procédé pour commander un verrou lumineux, dans lequel on effectue le mouvement d'un élément de verrou (4) fixé sur un arbre moteur d'un moteur pas à pas à deux phases (3) avec 2 enroulements et un grand angle de pas entier, dans lequel on réalise au moyen d'une unité de commande la rotation du champ électromagnétique dans le stator du moteur pas à pas (3) de 180° et ainsi une rotation correspondante de l'arbre moteur de 2 pas entiers, dans lequel on effectue au moyen de l'unité de commande une inversion simultanée du sens du courant dans les deux enroulements du moteur pas à pas (3) pour le mouvement orienté de l'élément de verrou (4), dans lequel on limite la rotation mécanique du rotor au moyen de deux tiges de butée (5) à une plage de mouvement inférieure à 2 pas entiers, et on choisit les positions des deux tiges de butée de telle manière que, lorsqu'il a atteint la position finale de l'élément de verrou (4), le rotor soit soumis à un couple qui maintient le rotor ou l'élément de verrou associé (4) dans la position finale.

2. Procédé selon la revendication 1, dans lequel on réduit les courants d'enroulement des deux enroulements du moteur pas à pas (3) chaque fois après avoir atteint la position finale de l'élément de verrou (4), dans lequel la position finale est atteinte après 2 pas entiers ou après le contact avec une des tiges de butée (5).

3. Procédé selon au moins une des revendications précédentes, dans lequel on coupe les courants d'enroulement des deux enroulements du moteur pas à pas (3) chaque fois que l'élément de verrou (4) atteint la position finale, lorsque le couple de maintien propre du moteur pas à pas (3) est suffisamment élevé pour maintenir l'élément de verrou (4) dans la position finale respective.

4. Procédé selon au moins une des revendications précédentes, dans lequel, lors de la mise en service de l'appareil optique par l'exploitation du signal du détecteur de fin de course (6), on assure que l'ouverture du diaphragme est fermée par l'élément de verrou (4).

5. Procédé selon au moins une des revendications précédentes, dans lequel, lors de la mise en service de l'appareil optique, on alimente les deux enroulements du moteur pas à pas (3) avec un courant de sens prédéterminé, afin d'assurer que l'ouverture du diaphragme soit fermée par l'élément de verrou (4).
